(19) Europäisches Patentamt
European Patent Office
Office européen des brevets

(11) **EP 3 809 563 B1**

(12) **EUROPEAN PATENT SPECIFICATION**

(45) Date of publication and mention
of the grant of the patent:
**10.04.2024 Bulletin 2024/15**

(51) International Patent Classification (IPC):
*H02K 1/30* $^{(2006.01)}$      *H02K 1/27* $^{(2022.01)}$
*H02K 21/02* $^{(2006.01)}$

(21) Application number: **19465576.7**

(52) Cooperative Patent Classification (CPC):
**H02K 1/30; H02K 1/2753; H02K 21/025;**
H02K 2213/09

(22) Date of filing: **15.10.2019**

(54) **ROTOR FOR AN ELECTRIC MACHINE**

ROTOR FÜR EINE ELEKTRISCHE MASCHINE

STATOR POUR UNE MACHINE ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.04.2021 Bulletin 2021/16**

(73) Proprietor: **Vitesco Technologies GmbH
93055 Regensburg (DE)**

(72) Inventor: **Murgoci, Dragos - c/o Continental
Automotive GmbH
81737 München (DE)**

(74) Representative: **Vitesco Technologies
Landsberger Straße 187 - Haus D
80687 München (DE)**

(56) References cited:
**EP-A1- 3 447 888**      **US-A1- 2003 067 240**
**US-A1- 2006 091 752**      **US-A1- 2017 194 835**

EP 3 809 563 B1

**Description**

The invention relates to a rotor for an electric machine. Further, the invention relates to an electric machine comprising the rotor. Additional claims are directed to a powertrain comprising the electric machine and to a vehicle comprising the powertrain.

In general, a variation of torque M and rotation speed of a rotor shaft of an electric machine (motor/generator) imposes a variation of electric current I. The variation of rotation speed is typically done in narrow range. The available electric current I and voltage V of an electric machine are limited due to a generation of Joule heat. According to the Lorentz law (in micro space at electrons level) and Laplace/Oersted law (in macro space at current level), the electromagnetic force F (also referred to as Lorentz force, Laplace / Oestered force) can be calculated by the following formula:

$$F = B \times I \times L.$$

In this formula

B is the magnetic induction,
I is the electric current, and
L is a length of a conductor, e.g., a permanent magnet.

The torque M at the rotor shaft can be calculated (simplified) by the following formula:

$$M = n \times F \times R.$$

In this formula

n is the number of rotor conductors, e.g., permanent magnets,
F is the electromagnetic force (calculated as above), and
R is the radius in between rotor axis and B center of gravity.

In this disclosure the expression "B center of gravity", which is known to a person skilled in the art, is used for the point on which a magnetic force acts on. This point represents the center of magnetic force. "R" is the radius in between rotor axis and the B center of gravity, and is referenced as "B center of gravity radius R" in this disclosure.

Thus, torque M especially depends on the electromagnetic force F (B, I, L). In order to increase the electromagnetic force F, it is necessary to increase the magnetic induction B and/or the electric current I and/or the length of the swept conductor L and also the disposing of the B center of gravity at radius R. Up to now, the only way for increasing torque M is to increase the electric current I. However, increasing the electric current I is limited due to generation of Joule heat, which may lead to an overheating of the electric machine, and to a damage/destruction of the motor/generator, i.e,. demagnetization of the permanent magnets due to exceeding Curie temperature.

A rotor construction for an electric machine may have deformable elements comprising ferrite in order to vary the radius R, width of magnets, and the length L, the ferrite, e.g., ferrite powder may be compound with the base material of the element, and may be magnetized at the end of the manufacturing process. Such elements, however, are difficult to produce in a laborious process and are expensive.

EP 3 447 888 A1 describes a rotor for an electric machine with elastic pads, where the elastic pads are permanent magnets. Deformation means are adapted to deform the permanent magnets. US 2003/067240 A1 describes a flexible rotor core that is deformed elliptically. Permanent magnet segments are mounted to the flexible rotor core. US 2006/091752 A1 describes a rotor with permanent magnets that are moved radially due to the centrifugal force when rotating. The magnets press against elastic pads. US 2017/194835 A1 describes a rotor assembly that is rotatable arranged in the case and includes a rotating member and a magnetic module disposed on the rotating member.

It is an object of the present invention to provide a rotor for an electric machine with an arrangement which allows higher electromagnetic force and torque and which is producible at low costs.

The problem is solved by the subject matter according to the independent claims. The dependent claims, the following description and the drawings show preferred embodiments of the invention. The present invention proposes a special rotor construction with pads comprising permanent magnets (conductors). The electric machine can be operated as a motor or as a generator, in order to fulfil respective needs. The permanent magnets are hosted in elastic pads, which can be elastically deformed in a rotor in order to obtain a variable magnetic induction B, swept conductor length L, width of magnets, and B center of gravity radius R. These parameters contribute into above described formula for the torque M at the rotor shaft. The special rotor construction allows to keep the stator current in a safe region regarding Joule heat, thereby avoiding an overheating and damage/destruction of the electric machine. Furthermore, even the torque can be increased due to a respective increase of parameters B, L, width of magnets, and R.

With this in mind, according to a first aspect of the invention, a rotor for an electric machine is provided. The rotor comprises elastic pads with an arrangement of permanent magnets, receptions for the elastic pads and deformation means. The elastic pads are adapted to be deformed elastically and are arranged within the receptions, wherein the receptions are designed such that the elastic pads can deform within the receptions. The deformation means are adapted to deform the elastic pads, e.g., from a rectangular shape into a non-rectangular shape, such that at least one of a magnetic induction B, a swept conductor length L, the width of the elastic pads and a B center of gravity radius R is adjusted.

The torque M and rotation speed s of the rotor can be varied in a large range at lower electric stator currents I. The rotor according to the first aspect of the invention further enables to decrease the current I when high torques M are demanded, especially when the electric machine is driven constantly at a maximum rotational speed smax. This has a huge positive impact on battery time charging, discharging, consumption as well as battery lifetime and power electronics protection (as high Joule heat effects are avoided, see above). These effects are achieved by elastic pads comprising an arrangement of permanent magnets, which can be produced in an easy way with a low number of steps. The permanent magnets may be readily available, so that no magnetizing is necessary after arranging the magnets in the pads. The term "arrangement" is to be understood such that there is a plurality of permanent magnets included in each of the pads, and each of the permanent magnets is arranged in a pre-defined way inside the un-deformed elastic pad. The following embodiments give some examples of such arrangements of magnets.

According to embodiments, in each of the elastic pads at least a subset of the plurality of permanent magnets is arranged in a regular pattern. A pattern may be, for example, a rectangular pattern, one or more curved or straight lines which are parallel or inclined with respect to a wall of the pad, or any other defined structure.

According to an embodiment, at least some of the permanent magnets are spaced-apart equidistantly from each other. The distance of the magnets from each other may, however, also vary in a pre-defined way to obtain a certain pattern.

A permanent magnet in the un-deformed elastic pad may have a cylindrical or a cubical shape, and one or more axis of the cylindrical or cuboidal shape may be oriented parallel to an edge of the pad. As an example, a permanent magnet may have cylindrical shape with a height of 2 mm and a diameter of 1 mm and its axis may be oriented in direction of the height (z-axis) of a cuboidal shaped pad.

The choice of the pattern and the orientation may depend on the course of the lines of the magnetic flux in the un-deformed and the deformed state of the elastic pad. E.g., by deforming the elastic pad, the orientation and the distances of the permanent magnets inside the pad may change. The orientation and the pattern in the un-deformed pad might be chosen such that the lines of the magnetic flux run most effectively in the un-deformed state of the pad, or at the maximum deformation, or in a state in-between, to drive the rotor.

According to a further embodiment, the permanent magnets are arranged in one or more layers inside the elastic pads, each layer comprising one or more arrays of permanent magnets. The elastic pad, which may have a cubical shape when not deformed, comprises cavities into which the permanent magnets are inserted. The cavities may be arranged in regular rows and columns in one plane to form such an array. A second plane or further planes may be present to form a three-dimensional matrix. In the third dimension, the magnets may be aligned such that the magnets of an upper layer are positioned above and aligned with the corresponding magnet of the lower layer. In this way, the arrangement is performed such that the lines of magnetic flux spread in a constructive way, i.e. along a short path, ideally without deviations and interfering each other, from the rotor to the stator.

Other arrangements than a strict matrix might be possible. Since the number of magnets N is directly proportional to the torque M, the number N is a parameter to dimension the rotor. The number of layers may be limited by the available space in the rotor space.

According to an embodiment, the elastic pads comprise polymer based elastic material. Polymer material is a common industrial product and therefore readily available and adaptable to the requirements of an application as an elastic pad in a rotor. For example, the elastic pads can be adapted to the required elasticity, the temperature range, magnetic conductivity, i.e., permeability, and can be processed to accommodate the permanent magnets inside the pad.

According to an embodiment, the elastic pads comprise silicone polymer. Silicone polymer can be used together with oxygen to produce silicone rubber. Silicone polymer, and therefore also silicone rubber, has excellent elastic characteristics and is heat resistant up to high temperatures. It may further contain fillers to improve properties or to reduce costs. Silicone rubber has a long live-time and is generally non-reactive, stable, radiation-resistant, and resistant to extreme environments and temperatures while still maintaining its useful properties. The silicon pads can be made by molding, so that recesses for the permanent magnets can be inserted.

According to an embodiment, the elastic pads comprise graphite. The graphite, which may be added in form of powder, is a diamagnetic material, which spreads the magnetic field inside the rotor, and therefore increases the magnetic effect in the rotor. Using a polymer material for the elastic pads, the graphite can easily be added during manufacturing.

According to an embodiment of the invention, the permanent magnets comprise a compound material. Compound materials allow for adjusting the magnetic properties to the needs of the applications. Such a compound material comprises, according to a further embodiment, neodymium. For example, the compound is an alloy Nd2Fe14B, which is highly magnetic. A further example of a compound may be samarium-cobalt (SmCo).

According to an embodiment, the elastic pads can comprise windings inserted into the elastic material. This embodiment can particularly fulfil high power needs.

In another embodiment of the invention, the deformation means comprise an axial cam. The axial cam is adapted to be moved, e.g., by respective mechanical means, forwards and backwards in an axial direction of the rotor (e.g., an x-axis, in particular a longitudinal axis of the rotor shaft), wherein a forward movement of the axial cam leads to a deformation of the elastic pads such that the permanent inside the pads are moved and at least one of the magnetic induction B, the swept conductor length L, the width of the elastic pads and the B center of gravity radius R is increased. This construction is very simple and reliable. By moving the axial cam forward, the elastic pads can be compressed and deformed such that they have a new shape due to the axial position/stroke of the axial cam. In particular, the shape of the elastic pads may depend on a position of the deformation means on an x-axis (in particular a longitudinal axis of the rotor shaft).

According to another embodiment of the invention, the axial cam is adapted to be moved backwards in the axial direction of the rotor, wherein a backward movement of the axial cam leads to a back-deformation of the elastic pads such that at least one of the magnetic induction B, the swept conductor length L, the width of the elastic pads and the B center of gravity radius R is decreased.

According to a second aspect of the present invention, an electric machine is provided, wherein the electric machine comprises a rotor according to the first aspect of the invention. The electric machine provides the function of a continuous variation machine (reducer/multiplier), e.g., depending on a position of the deformation means on an x-axis (in particular a longitudinal axis of the rotor shaft), and the electric current parameter I. Thus, an extra gearbox is not necessary. Therefore, the electric machine is very compact, simple and cheap. The electric machine can be handled and controlled easily. Furthermore, the electric machine can be operated efficiently because no reduction is needed and nearly no vibrations and heat developed from the magnetic field vibrations occur.

The electric machine can be implemented, e.g., in 48V car projects as a belt starter generator (BSG). Furthermore, the electric machine can be used as a motor for an electromagnetic brake (dry break) instead of a gearbox. Also, the electric machine can be used as a motor for a steering rack or for VED applications.

In an embodiment, the rotor further comprises a rotor shaft and a stator. In this embodiment, the deformation means are adapted to deform the elastic pads such that a current in the stator remains at a constant level, and - at the same time - a torque of the rotor shaft is increased. Thus, a very high torque can be generated, wherein the stator current can be kept securely below a critical temperature.

Additionally or alternatively, the deformation means can be adapted to deform the elastic pads such that the torque at the rotor shaft remains at a constant level, and - at the same time - the current in the stator is decreased. By decreasing the electric current in the stator and/or by maintaining the current as low as possible, the rotor and especially power electronics of the electric machine are protected against overheating and damages/destruction due to Joule heat effects. At the same time, the torque at the rotor shaft is not decreasing.

Furthermore, the electric machine can be particularly flexible adapted to be operated as a motor and as a generator.

According to a third aspect of the present invention a powertrain is provided, wherein the powertrain comprises an electric machine according to the second aspect of the invention.

According to a fourth aspect of the present invention, a car is provided, wherein the car comprises a powertrain according to the third aspect of the invention. The car can be e.g., a motor vehicle such as a car, a motorcycle, a bus or a truck.

These and other aspects of the invention will be apparent from and elucidated with reference to the embodiments as per the drawings described hereinafter. In the following description, exemplary embodiments of the invention are explained with reference to the accompanying schematic drawing.

Fig. 1 shows a longitudinal sectional view (right) and a cross-sectional view (left) of an electric machine according to an embodiment of the invention of the electric machine in a first state.

Fig. 2 shows a longitudinal sectional view (right) and a cross-sectional view (left) of the electric machine as per Fig. 1 in a second state.

Fig. 3 shows a longitudinal sectional view (right) and a cross-sectional view (left) of the electric machine as per Fig. 1 in a third state.

Fig. 4 shows a longitudinal sectional view (right) and a cross-sectional view (left) of the electric machine as per Fig. 1 in a fourth state.

Fig. 5 shows a longitudinal sectional view (right) and a cross-sectional view (left) of the electric machine as per Fig. 1 in a fifth state.

Fig. 6a shows a first state of deformation of an elastic pad that comprises permanent magnets.

Fig. 6b shows a second state of deformation of an elastic pad that comprises permanent magnets.

Fig. 6c shows a third state of deformation of an elastic pad that comprises permanent magnets.

Fig. 7 shows a cross section of the motor with elastic pads that comprise permanent magnets.

Fig. 8 shows a three-dimensional drawing of an elastic pad that comprises permanent magnets.

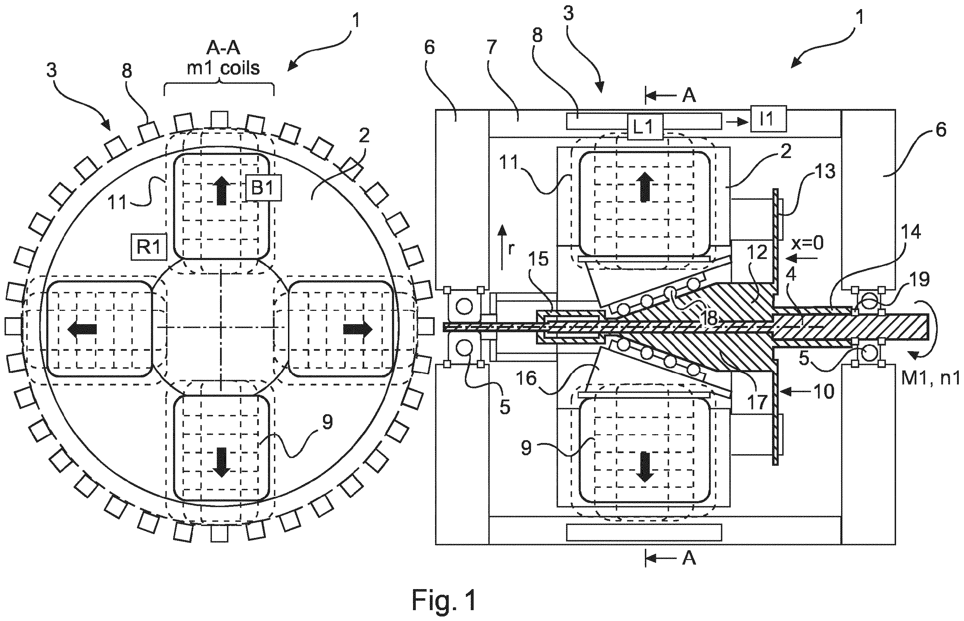

Fig. 1 shows an electric machine 1 for a powertrain (not shown) of a vehicle (not shown). The electric machine 1 comprises a rotor 2 and a stator 3. The rotor 2 comprises a shaft 4, which is rotatably mounted in two rolling bearings 5. The rolling bearings 5 are each mounted within a shield 6 of a housing 7 of the electric machine 1. The housing 7 also accommodates the stator 3 which surrounds the rotor 2.

In the shown exemplary embodiment, the stator 3 comprises 36 stator coils 8 arranged in a circumferential direction around the stator 3, and the rotor 2 comprises four elastic pads 9 arranged in a circumferential direction around the rotor 2, wherein the elastic pads 9 fulfil the function of a conductor. Each of the elastic pads comprises a number of permanent magnets (not shown in Figs. 1 to 5). The elastic pads 9 are adapted to be deformed elastically and may be made of a silicone rubber forming a pad or rubber block, as depicted by Figs. 1 to 5. Alternatively, the elastic pads 9 may comprise windings inserted into an elastic metrics material for high power needs.

The elastic pads 9 each are accommodated in one reception of the rotor 2 such that the elastic pads 9 can deform within the receptions. The electric machine 1 further comprises deformation means 10, which are adapted to elastically deform the elastic pads 9 such that at least one of a magnetic induction B characterized by a magnetic field 11, a swept conductor length L, the width of the elastic pads and the B center of gravity radius R is reversibly adjusted.

The formation means 10 may comprise an axial cam 12, a first spline element 13, a second spline element 14 and a third spline element 15 as well as one conical rod 16 assigned to each one of the elastic pads 9 (thus, there are four conical rods 16 altogether).

When the shaft 4 is rotating, a torque M is transmitted from the shaft 4 to the second spline element and to the third spline element 15. In the shown embodiment, the first spline element 13, the second spline element 14 and the third spline element 15 are stiff and connected to the axial cam 12 in a one-piece manner. Thus, the transmitted torque M can be further transmitted from the second spline element 13 to axial protrusions of the rotor 2. As a result, a torque M can be transmitted from the shaft 4 to the rotor 2 by means of the spline elements 13 to 15.

In the shown embodiment, the axial cam 12 comprises a conical part 17 corresponding to the conical rods 16, and the conical rods 16 each comprise a roller system 18. The roller system 18 is rotatably arranged in the area of an inner surface of the conical rod 16 such that an outer surface of the conical part 17 of the axial cam 12 can roll on the conical rod 16 by means of the roller system 18.

Thereby the axial cam 12 can move forward continuously (i.e. to the left as per Figs. 1 to 5) in a longitudinal direction x. At the same time, the conical rods 16 are moving continuously outward in a radial direction r due to the conical inner surfaces of the conical rods 16 and the outer surface of the conical part 17 of the axial cam 12. Each of the conical rods 16 further comprises an outer surface (which may be formed substantial cylindrical) being in contact with one of the elastic pads 9. Therefore, if the conical rods 16 are moving outward in the radial direction r, their outer surfaces are pressing against the elastic pads 9. This pressing leads to a deformation of the elastic pads 9 comprising the permanent magnets. In the shown embodiment shown by Figs. 1 to 4, the forward movement of the axial cam 12 leads to a deformation of the elastic pads 9 and a movement of the enclosed permanent magnets mainly in radial direction such that the magnetic induction B, the swept conductor length L, the width of the elastic pads and the B center of gravity radius R are increased simultaneously.

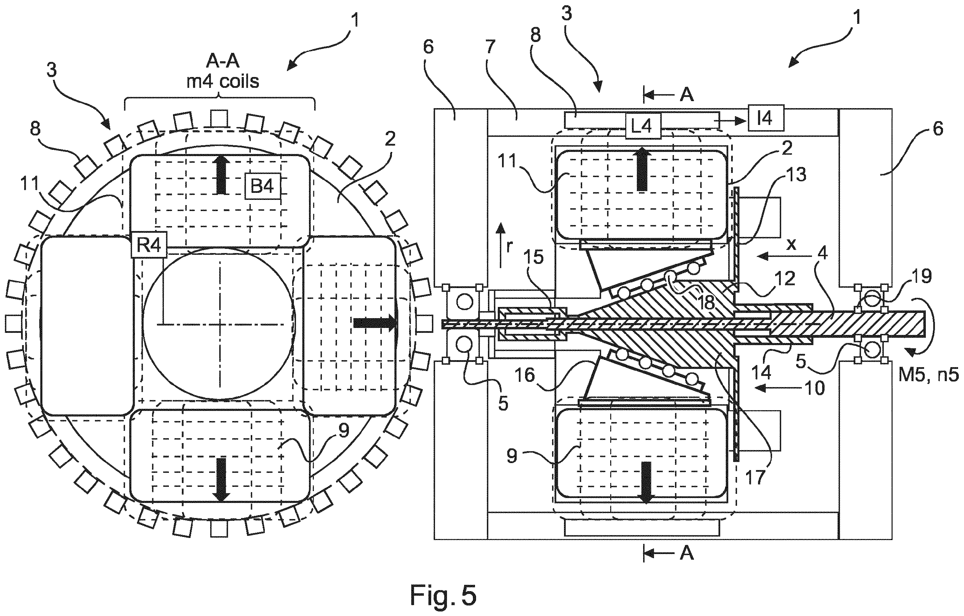

Similarly, the axial cam 12 can move backward (i.e. to the right as per Figs. 1 to 5) in the longitudinal direction x, while - at the same time - the conical rods 16 are moving inward in the radial direction r. Therefore, if the conical rods 16 are moving inward in the radial direction r, the pressure applied to the elastic pads 9 by the conical rods 16 is reduced. This reducing of pressure leads to an elastic re-deformation of the elastic pads 9 back to their initial forms and the enclosed permanent magnets to their original position. In the shown embodiment shown by Fig. 5, the backward movement of the axial cam 12 leads to a deformation of the elastic pads 9 such that the magnetic induction B, the swept conductor length L, the width of the elastic pads and the B center of gravity radius R are decreased simultaneously.

Thus, the elastic deformation of the respective elastic pad 9 depends on a position of the axial cam 12 on the x-axis and, correspondingly, on the position of the respective conical rod 16 in the radial direction.

The electric machine 1 can further comprise means (not shown) for moving the axial cam 12 forward in an axial direction x (i.e., to the left as per Figs. 1 to 5). Such means can, e.g., comprise electromagnetic magnetic means being adapted for generating a magnetic field to push the actual cam 12 forward in the actual direction x. Alternatively or additionally, a mechanical mechanism can be implemented to push the actual cam 12 forward in the actual direction x. To move the axial cam 12 backward in the actual direction x (i.e. to the right as per Figs. 1 to 5), the electric machine 1 may use the re-deformation of the elastic pads 9 back to their initial forms. This re-deformation can automatically lead to a movement of the axial cam 12 back to its position as shown in Fig. 1.

Fig. 1 shows the axial cam 12 in a first axial end position (utmost right according to Fig. 1) and the conical rods 16 in a first radial end position (utmost inward according to Fig. 1). In the first axial end position, an axial front side of the second spline element 14 of the axial cam 12 abuts against a stopper element 19 assigned to the rolling bearing 5 shown right in Fig. 1. In their first radial end positions, the outer surfaces of the conical rods 16 exert minimum pressure on the elastic pads 9 such that the elastic pads 9 are not deformed or only deformed slightly. In the state as per Fig. 1, the rotor shaft 4 rotates at a first rotation speed s1 (which may be the maximum rotation speed smax of the rotor 2) and delivers a torque M1 at a first stator current I1. Additionally, the permanent magnets in the elastic pads 9 generate a first magnetic induction B1 while the elastic pads/conductors extend over a first length L1 (measured in the axial direction x), extend over the width of the elastic pads, and the B center of gravity radius extends over to a first radius R1.

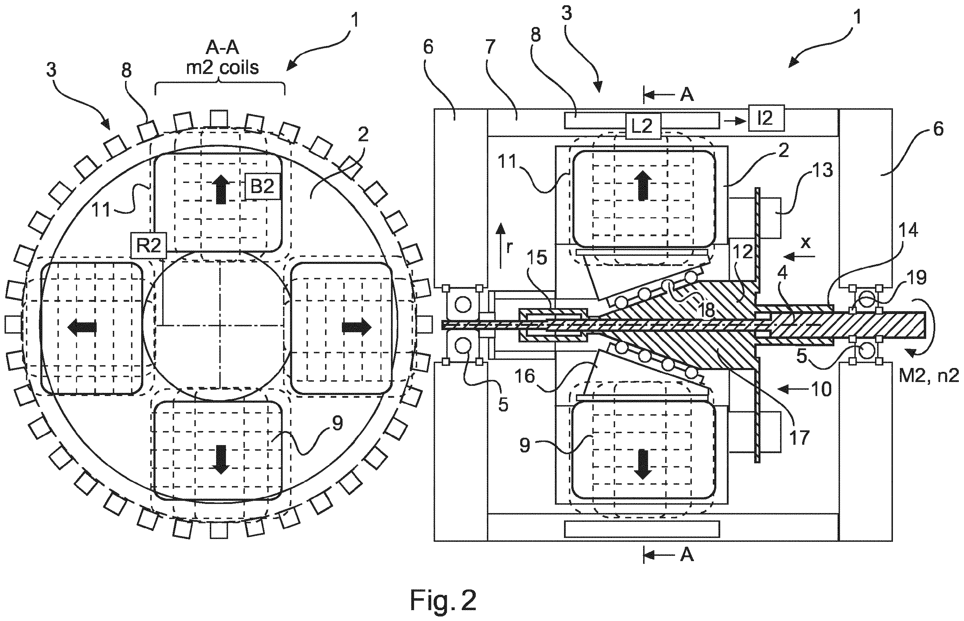

Fig. 2 shows the axial cam 12 in a second axial position (more left compared to the first axial position as per Fig. 1) and the conical rods 16 in a second radial position (more outward compared to the first axial position as per Fig. 1). In the second axial position, the axial front side of the second spline element 14 no longer abuts against the stopper element 19. In their second radial positions (as per Fig. 2), the outer surfaces of the conical rods 16 exert more pressure on the elastic pads 9 than in their first radial end positions (as per Fig. 1).

Thereby, the elastic pads 9 are deformed such that they extend over a second length L2 (further than L1), extend over the width of the elastic pads and the B center of gravity radius extends over to a second radius R2 (further than R1). Also, the permanent magnets 9 in the elastic pads 9 generate a second magnetic induction B2 (higher than B1). The second length L2, the second radius R2 and the second magnetic induction B2 lead to a second torque M2 delivered by the rotor shaft 4 at a second rotation speed s2 and at a second stator current I2. The second rotation speed s2 may be the same as the first rotation speed s1 (s = constant). Due to L2, R2 and B2 being increased compared to L1, R1 and B1, the second torque M2 may also be increased compared to the first torque M1. The second stator current I2 may be lower than the first stator current I1. Alternatively, the current in the stator can be kept constant (I2 = 11), while - at the same time - the torque is increased (M2 > M1). Furthermore, the torque can be kept at a constant level (M2 = M1), while - at the same time - the stator current can be decreased (I2 < 11).

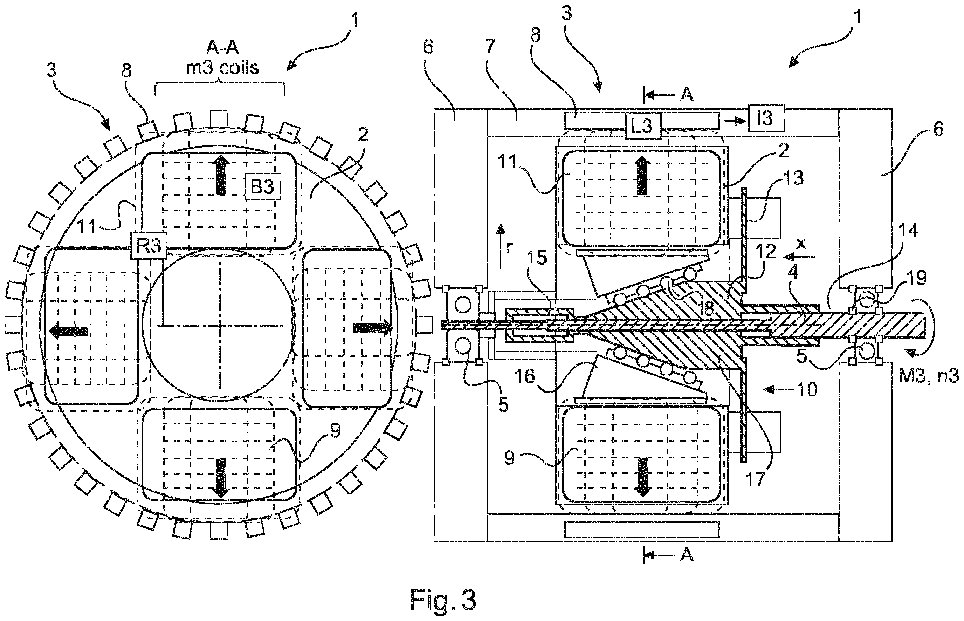

Fig. 3 shows the axial cam 12 in a third axial position (more left compared to the second axial position as per Fig. 2) and the conical rods 16 in a third radial position (more outward compared to the second axial position as per Fig. 2). In their third radial positions (as per Fig. 3), the outer surfaces of the conical rods 16 exert more pressure on the elastic pads 9 than in their second radial end positions (as per Fig. 2).

Thereby, the elastic pads 9 are deformed such that they extend over a third length L3 (further than L2), extend over the width of the elastic pads and the B center of gravity radius extends over a third radius R3 (further than R2). Also, the permanent magnets 9 in the elastic pads 9 each generate a third magnetic induction B3 (higher than B2). The third length L3, the third radius R3 and the third magnetic induction B3 lead to a third torque M3 delivered by the rotor shaft 4 at a third rotation speed s3 and at a third stator current I3. The third rotation speed s3 may be the same as the second rotation speed s2 (s = constant). Due to L3, R3 and B3 being increased compared to L2, R2 and B2, the third torque M3 may also be increased compared to the second torque M3. The third stator current I3 may be lower than the second stator current I2. Alternatively, the current in the stator can be kept constant (I3 = I2), while - at the same time - the torque is increased (M3 > M2). Furthermore, the torque can be kept at a constant level (M3 = M2), while - at the same time - the stator current can be decreased (I3 < I2).

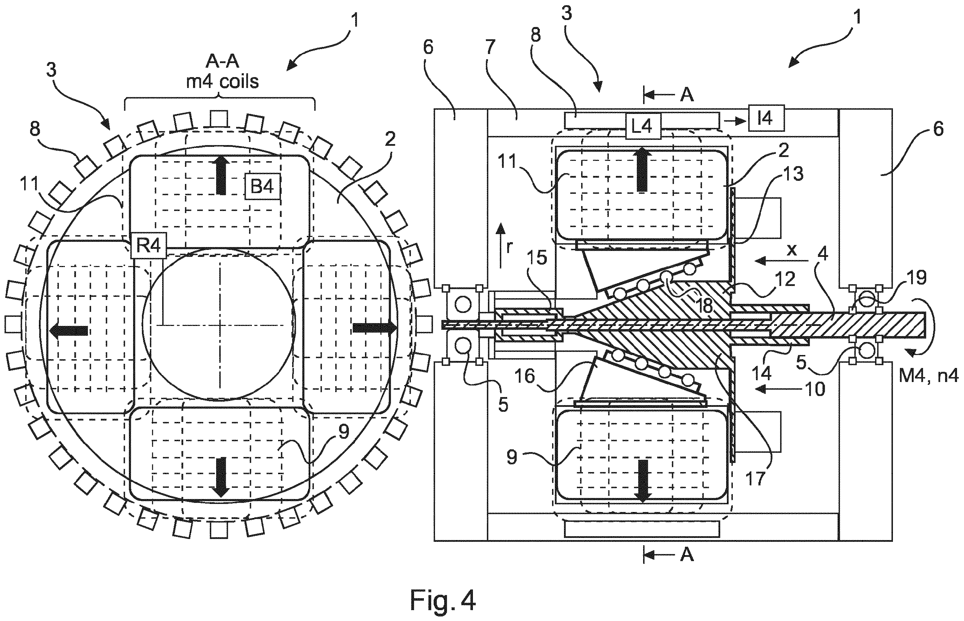

Fig. 4 shows the axial cam 12 in a fourth axial end position (utmost left according to Fig. 4) and the conical rods 16 in a fourth radial end position (utmost outward according to Fig. 4). In the fourth axial end position, a surface (facing left in Fig. 4) of the third spline element 15 of the axial cam 2 abuts against another stopper surface (facing right in Fig. 4) of the rotor 2. In their fourth radial end positions (as per Fig. 4), the outer surfaces of the conical rods 16 exert maximum pressure on the elastic pads 9 (higher pressure than in their radial positions as per Figs. 1 to 3).

Thereby, the elastic pads 9 are deformed such that they extend over a fourth (maximum) length L4 (further than L3), extend over the width of the elastic pads and the B center of gravity radius extends over a fourth (maximum) radius R4 (further than R3). Also, the permanent magnets 9 in the elastic pads 9 each generate a fourth (maximum) magnetic induction B4 (higher than B3). The fourth length L4, the fourth radius R4 and the fourth magnetic induction B4 lead to a fourth torque M4 delivered by the rotor shaft 4 at a fourth rotation speed s4 and at a fourth stator current I4. The fourth rotation speed s4 may be the same as the third rotation speed s3 (s = constant). Due to L4, R4 and B4 being increased compared to L3, R3 and B3, the fourth torque M4 may also be increased compared to the third torque M3. The fourth stator current I4 may be lower than the third stator current I3. Alternatively, the current in the stator can be kept constant (I4 = I3), while - at the same time - the torque is increased (M4 > M3). Furthermore, the torque can be kept at a constant level (M4 = M3), while - at the same time - the stator current can be decreased (I4 < I3).

Fig. 5 shows the axial cam 12 in its fourth axial end position and the conical rods 16 in their fourth radial end position as per Fig. 4. Therefore, the elastic pads 9 are deformed having the fourth length L4, the rotor extending over the fourth radius R4, and the elastic pads 9 each generating the fourth magnetic induction B4 as per Fig. 4. The rotation speed of the rotor shaft may be kept constant (s5 = s4), also. The stator current may be decreased further (compared to the state as per Fig. 4) down to a value of I5 (I5 can be a minimum stator current value). Due to constant L4, R4 and B4 and decreased I5, a fifth torque M5 may also be decreased compared to the fourth torque M4.

By moving the axial cam 12 backward in the axial direction x (into the right direction as per Figs. 1 to 5), the axial cam 12 can be moved back continuously towards and into its first axial end position as per Fig. 1, and the conical rods 16 can be moved back continuously towards and into their first radial end position as per Fig. 1. The backward movement of the axial cam 12 can lead to the deformation states of the elastic pads 9 as per Fig. 1 to 3 with conductor lengths L1 to L3 and rotor radii R1 to R3, magnetic inductions B1 to B3, torques M1 to M3 and stator currents I1 to I3 at rotation speeds s1 to s3.

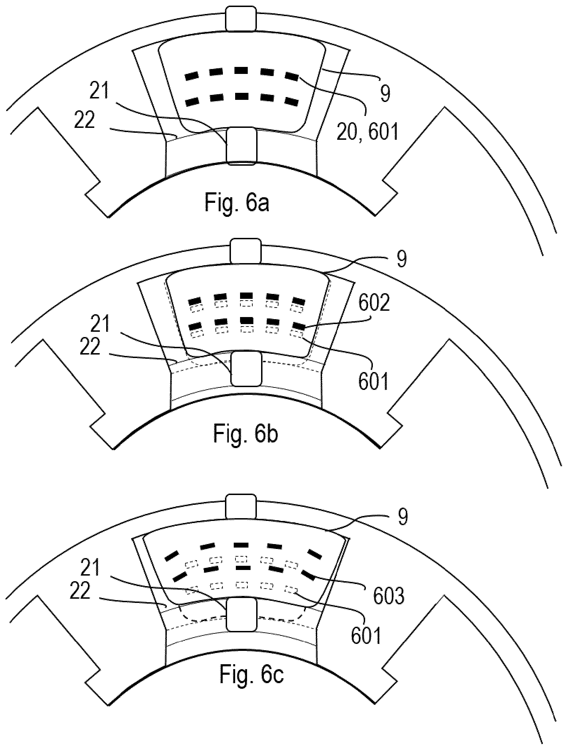

Figs. 6a to 6c show different states of the deformation of the elastic pads, wherein the movement of the magnets and the deformation of the pad is illustrated. In the example of Fig. 6a, the permanent magnets 601 are arranged in two layers in the elastic pad 9. Each layer contains five permanent magnets. The permanent magnets are located in their original positions 601 when the pad 9 is in a not deformed state.

In Fig. 6b, the deformation means 21, 22 exert a pressure onto the elastic pad 9 from the bottom side, such that the permanent magnets 20 are shifted radially from positions 601 to positions 602, thereby increasing the radius R. At the same time, the length of the elastic pad 9 in tangential direction is increased, thereby increasing the conductor length L.

Fig. 6c shows the deformation in a further state, where more pressure is exerted to the elastic pad than illustrated in Fig. 6b.

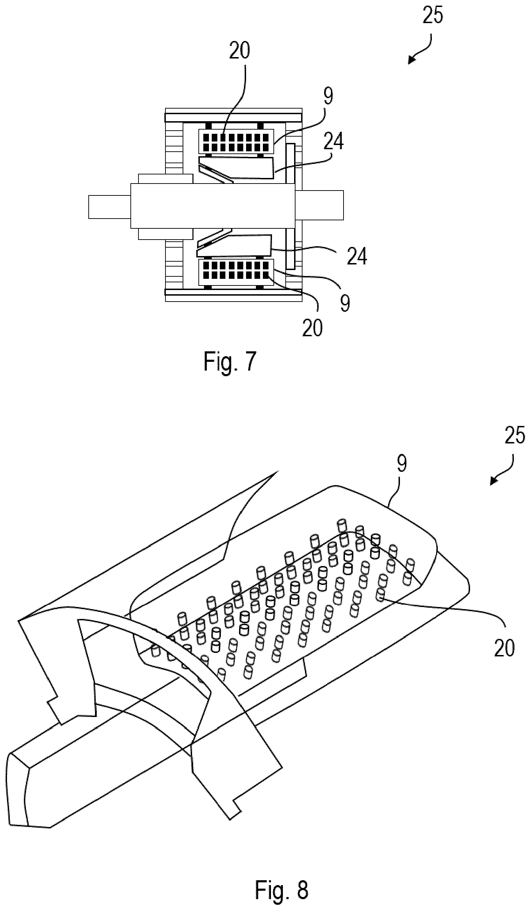

Fig. 7 shows a drawing, which represents a cross section of the motor with elastic pads 9 and permanent magnets 20 that are arranged in two layers. The deformation means 24 are adapted to press against the elastic pads 9

Fig. 8 shows a three-dimensional drawing of the elastic pad 9 with permanent magnets 101 in a motor 25. The permanent magnets 20 are again arranged in two layers in this example.

**Claims**

1. A rotor (2) for an electric machine (1), the rotor (2) comprising elastic pads (9), receptions for the elastic pads (9) and deformation means (10), wherein each of the elastic pads (9) comprises an arrangement of permanent magnets, wherein the arrangement of permanent magnets is a plurality of permanent magnets included in each of the pads, and each of the permanent magnets is arranged in a pre-defined way inside the un-deformed elastic pads,

    the elastic pads (9) are adapted to be deformed elastically,
    the elastic pads (9) are arranged within the receptions,
    the receptions are designed such that the elastic pads (9) can deform within the receptions, and the deformation means (10) are adapted to press against the elastic pads (9) thereby deforming the elastic pads (9) such that at least one of a magnetic induction (B), a length of elastic pads measured in the axial direction (L), the width of the elastic pads and the B center of gravity radius (R) is adjusted, wherein the B center of gravity radius (R) is the radius in between rotor axis and the point on which a magnetic force acts on.

2. The rotor (2) according to claim 1, wherein at least a subset of the permanent magnets of the arrangement of permanent magnets is arranged in a regular pattern; and/or wherein at least a subset of the permanent magnets is arranged in at least one line; and/or wherein at least some of the permanent magnets are equidistantly spaced-apart from each other.

3. The rotor (2) according to claim 1 or 2, wherein the permanent magnets are arranged in one or more layers inside the elastic pads, each layer comprising one or more arrays of permanent magnets.

4. The rotor (2) according to any of the preceding claims, wherein the elastic pads (9) comprise polymer based elastic material, particularly silicone.

5. The rotor (2) according to any of the preceding claims, wherein the elastic pads (9) comprise graphite.

6. The rotor (2) according to any of the preceding claims, wherein the permanent magnets comprise a compound material; or the permanent magnets comprise a neodymium compound material.

7. The rotor (2) according to one of the preceding claims, wherein the elastic pads (9) can comprise windings inserted into an elastic matrix material.

8. The rotor (2) according to one of the preceding claims, wherein

    the deformation means (10) comprise an axial cam (12),
    the axial cam (12) is adapted to be moved forwards and backwards in an axial direction (x) of the rotor (2), and
    a forward movement of the axial cam (12) leads to a deformation of the elastic pads (9) such that at least one of the magnetic induction (B), the swept conductor length (L), the width of the elastic pads and the B center of gravity radius (R) is increased.

9. The rotor (2) according to claim 8, wherein

   the axial cam (12) is adapted to be moved backwards in the axial direction (x) of the rotor (2), and
   a backward movement of the axial cam (12) leads to a back-deformation of the elastic pads (9) such that at least one of the magnetic induction (B), the swept conductor length (L), the width of the elastic pads (9), and the B center of gravity radius (R) is decreased.

10. An electric machine (1) for a vehicle comprising a rotor (2) according to any of claims 1 to 9.

11. The electric machine (1) according to claim 10, the rotor (2) further comprising a rotor shaft (4) and a stator (3), wherein the deformation means (10) are adapted to deform the elastic pads (9) such that

    a current (I) in the stator (3) remains at a constant level, and
    at the same time, a torque (M) of the rotor shaft (4) is increased.

12. The electric machine (1) according to claim 11, the electric machine (1) further comprising a rotor shaft (4) and a stator (3), wherein the deformation means (10) are adapted to deform the elastic pads (9) such that

    a torque (M) at the rotor shaft (4) remains at a constant level, and
    at the same time, a current (I) in the stator (3) is decreased.

13. The electric machine (1) according to any of the claims 11 to 12, wherein the electric machine (1) is adapted to be operated as a motor and as a generator.

14. A power train for a vehicle comprising an electric machine (1) according to one of the claims 10 to 13.

15. A vehicle comprising a powertrain according to claim 14.


**Patentansprüche**

1. Rotor (2) für eine elektrische Maschine (1), wobei der Rotor (2) elastische Kissen (9), Aufnahmen für die elastischen Kissen (9) und Verformungsmittel (10) umfasst, wobei

   jedes der elastischen Kissen (9) eine Anordnung von Permanentmagneten umfasst, wobei die Anordnung von Permanentmagneten eine Mehrzahl von Permanentmagneten ist, die in jedem der Kissen enthalten sind, und jeder der Permanentmagneten in einer vorab definierten Weise im Inneren der unverformten elastischen Kissen angeordnet ist,
   die elastischen Kissen (9) dafür eingerichtet sind, elastisch verformt zu werden,
   die elastischen Kissen (9) in den Aufnahmen angeordnet sind,
   die Aufnahmen derart gestaltet sind, dass sich die elastischen Kissen (9) in den Aufnahmen verformen können, und
   die Verformungsmittel (10) dafür eingerichtet sind, gegen die elastischen Kissen (9) zu drücken und dabei die elastischen Kissen (9) zu verformen, so dass mindestens eines von einer magnetischen Induktion (B), einer in der axialen Richtung gemessenen Länge der elastischen Kissen (L), der Breite der elastischen Kissen und des B-Schwerpunktradius (R) justiert wird, wobei der B-Schwerpunktradius (R) der Radius zwischen der Rotorachse und dem Punkt ist, an dem eine Magnetkraft einwirkt.

2. Rotor (2) nach Anspruch 1, wobei mindestens eine Teilmenge der Permanentmagneten der Anordnung von Permanentmagneten in einem regelmäßigen Muster angeordnet ist und/oder wobei mindestens eine Teilmenge der Permanentmagneten in mindestens einer Linie angeordnet ist und/oder wobei mindestens einige der Permanentmagneten gleichmäßig voneinander beabstandet sind.

3. Rotor (2) nach Anspruch 1 oder 2, wobei die Permanentmagneten in einer oder mehreren Schichten in den elastischen Kissen angeordnet sind, wobei jede Schicht eine oder mehrere Felder von Permanentmagneten umfasst.

4. Rotor (2) nach einem der vorhergehenden Ansprüche, wobei die elastischen Kissen (9) elastisches Material auf Polymerbasis, insbesondere Silikon, umfassen.

5. Rotor (2) nach einem der vorhergehenden Ansprüche, wobei die elastischen Kissen (9) Graphit umfassen.

6. Rotor (2) nach einem der vorhergehenden Ansprüche, wobei die Permanentmagneten ein Verbundmaterial umfassen oder die Permanentmagneten ein Neodym-Verbundmaterial umfassen.

7. Rotor (2) nach einem der vorhergehenden Ansprüche, wobei die elastischen Kissen (9) Wicklungen umfassen können, die in ein elastisches Matrixmaterial eingesetzt sind.

**8.** Rotor (2) nach einem der vorhergehenden Ansprüche, wobei die Verformungsmittel (10) eine axiale Nockenscheibe (12) umfassen,

die axiale Nockenscheibe (12) dafür eingerichtet ist, in einer axialen Richtung (x) des Rotors (2) vorwärts und rückwärts bewegt zu werden, und
eine Vorwärtsbewegung der axialen Nockenscheibe (12) zu einer Verformung der elastischen Kissen (9) derart führt, dass mindestens eines von der magnetischen Induktion (B), der überstrichenen Leiterlänge (L), der Breite der elastischen Kissen und dem B-Schwerpunktradius (R) erhöht wird.

**9.** Rotor (2) nach Anspruch 8, wobei

die axiale Nockenscheibe (12) dafür eingerichtet ist, in der axialen Richtung (x) des Rotors (2) rückwärts bewegt zu werden, und
eine Rückwärtsbewegung der axialen Nockenscheibe (12) zu einer Rückverformung der elastischen Kissen (9) derart führt, dass mindestens eines von der magnetischen Induktion (B), der überstrichenen Leiterlänge (L), der Breite der elastischen Kissen (9) und dem B-Schwerpunktradius (R) verringert wird.

**10.** Elektrische Maschine (1) für ein Fahrzeug, umfassend einen Rotor (2) nach einem der Ansprüche 1 bis 9.

**11.** Elektrische Maschine (1) nach Anspruch 10, wobei der Rotor (2) ferner eine Rotorwelle (4) und einen Stator (3) umfasst, wobei die Verformungsmittel (10) dafür eingerichtet sind, die elastischen Kissen (9) derart zu verformen, dass

ein Strom (I) in dem Stator (3) auf einer konstanten Höhe bleibt und
gleichzeitig ein Drehmoment (M) der Rotorwelle (4) erhöht wird.

**12.** Elektrische Maschine (1) nach Anspruch 11, wobei die elektrische Maschine (1) ferner eine Rotorwelle (4) und einen Stator (3) umfasst, wobei die Verformungsmittel (10) dafür eingerichtet sind, die elastischen Kissen (9) derart zu verformen, dass

ein Drehmoment (M) an der Rotorwelle (4) auf einer konstanten Höhe bleibt und
gleichzeitig ein Strom (I) in dem Stator (3) verringert wird.

**13.** Elektrische Maschine (1) nach einem der Ansprüche 11 bis 12, wobei die elektrische Maschine (1) dafür eingerichtet ist, als Motor und als Generator betrieben zu werden.

**14.** Antriebsstrang für ein Fahrzeug, umfassend eine elektrische Maschine (1) nach einem der Ansprüche 10 bis 13.

**15.** Fahrzeug, umfassend einen Antriebsstrang nach Anspruch 14.

**Revendications**

**1.** Rotor (2) pour une machine électrique (1), le rotor (2) comprenant des tampons élastiques (9), des réceptions pour les tampons élastiques (9) et des moyens de déformation (10), dans lequel

chacun des tampons élastiques (9) comprend un agencement d'aimants permanents, dans lequel l'agencement d'aimants permanents est une pluralité d'aimants permanents inclus dans chacun des tampons, et chacun des aimants permanents est agencé de manière prédéfinie à l'intérieur des tampons élastiques non déformés,
les tampons élastiques (9) sont adaptés pour être déformés élastiquement,
les tampons élastiques (9) sont agencés à l'intérieur des réceptions,
les réceptions sont conçues de telle sorte que les tampons élastiques (9) puissent se déformer à l'intérieur des réceptions, et
les moyens de déformation (10) sont adaptés pour presser contre les tampons élastiques (9), ainsi déformant les tampons élastiques (9), de telle sorte qu'au moins un parmi une induction magnétique (B), une longueur de tampons élastiques mesurée dans la direction axiale (L), la largeur des tampons élastiques et le rayon de centre de gravité B (R) soit ajusté, dans lequel le rayon de centre de gravité B (R) est le rayon entre un axe de rotor et le point sur lequel une force magnétique agit.

**2.** Rotor (2) selon la revendication 1, dans lequel au moins un sous-ensemble des aimants permanents de l'agencement d'aimants permanent est agencé en un motif régulier ; et/ou dans lequel au moins un sous-ensemble des aimants permanents est agencé en au moins une ligne ; et/ou dans lequel au moins certains des aimants permanents sont espacés les uns des autres de façon équidistante.

**3.** Rotor (2) selon la revendication 1 ou 2, dans lequel les aimants permanents sont agencés en une ou plusieurs couches à l'intérieur des tampons élastiques, chaque couche comprenant une ou plusieurs série d'aimants permanents.

**4.** Rotor (2) selon l'une quelconque des revendications précédentes, dans lequel les tampons élastiques (9) comprennent un matériau élastique à base de polymère, particulièrement de la silicone.

**5.** Rotor (2) selon l'une quelconque des revendications précédentes, dans lequel les tampons élastiques (9) comprennent du graphite.

**6.** Rotor (2) selon l'une quelconque des revendications précédentes, dans lequel les aimants permanents comprennent un matériau-composé ; ou les aimants permanents comprennent un matériau-composé néodyme.

**7.** Rotor (2) selon l'une des revendications précédentes, dans lequel les tampons élastiques (9) peuvent comprendre des enroulements insérés dans un matériau matriciel élastique.

**8.** Rotor (2) selon l'une des revendications précédentes, dans lequel les moyens de déformation (10) comprennent une came axiale (12),

la came axiale (12) est adaptée pour être mue vers l'avant et vers l'arrière dans une direction axiale (x) du rotor (2), et
un mouvement vers l'avant de la came axiale (12) entraîne une déformation des tampons élastiques (9) de telle sorte qu'au moins un parmi l'induction magnétique (B), la longueur de conducteur balayé (L), la largeur des tampons élastiques et le rayon de centre de gravité B (R) soit augmenté.

**9.** Rotor (2) selon la revendication 8, dans lequel la came axiale (12) est adaptée pour être mue vers l'arrière dans la direction axiale (x) du rotor (2), et un mouvement vers l'arrière de la came axiale (12) entraîne une rétro-déformation des tampons élastiques (9) de telle sorte qu'au moins un parmi l'induction magnétique (B), la longueur de conducteur balayé (L), la largeur des tampons élastiques (9), et le rayon de centre de gravité B (R) soit réduit.

**10.** Machine électrique (1) pour un véhicule, comprenant un rotor (2) selon l'une quelconque des revendications 1 à 9.

**11.** Machine électrique (1) selon la revendication 10, le rotor (2) comprenant en outre un arbre de rotor (4) et un stator (3), dans laquelle les moyens de déformation (10) sont adaptés pour déformer les tampons élastiques (9) de telle sorte que

un courant (I) dans le stator (3) reste à un niveau constant, et
en même temps, un couple (M) de l'arbre de rotor (4) soit augmenté.

**12.** Machine électrique (1) selon la revendication 11, la machine électrique (1) comprenant en outre un arbre de rotor (4) et un stator (3), dans laquelle les moyens de déformation (10) sont adaptés pour déformer les tampons élastiques (9) de telle sorte qu'un couple (M) sur l'arbre de rotor (4) reste à un niveau constant, et
en même temps, un courant (I) dans le stator (3) soit réduit.

**13.** Machine électrique (1) selon l'une quelconque des revendications 11 et 12, dans laquelle la machine électrique (1) est adaptée pour être utilisée en tant que moteur et en tant que générateur.

**14.** Groupe motopropulseur pour un véhicule, comprenant une machine électrique (1) selon l'une des revendications 10 à 13.

**15.** Véhicule, comprenant un groupe motopropulseur selon la revendication 14.

Fig. 1

Fig. 2

Fig. 3

Fig. 4

Fig. 5

Fig. 6a

Fig. 6b

Fig. 6c

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3447888 A1
- US 2003067240 A1
- US 2006091752 A1
- US 2017194835 A1